**Europäisches Patentamt**

**European Patent Office**

**Office européen des brevets**

(19)

(11) Publication number : **0 417 184 B1**

## (12) EUROPEAN PATENT SPECIFICATION

(45) Date of publication of patent specification :
**23.12.92 Bulletin 92/52**

(51) Int. Cl.⁵ : **F16L 55/16**

(21) Application number : **89906851.4**

(22) Date of filing : **25.05.89**

(86) International application number :
**PCT/SE89/00294**

(87) International publication number :
**WO 89/12198 14.12.89 Gazette 89/29**

(54) **PIPE FOR RELINING UNDERGROUND PIPELINES.**

(30) Priority : **30.05.88 SE 8802005**

(43) Date of publication of application :
**20.03.91 Bulletin 91/12**

(45) Publication of the grant of the patent :
**23.12.92 Bulletin 92/52**

(84) Designated Contracting States :
**AT BE CH DE FR GB IT LI LU NL SE**

(56) References cited :
**EP-A- 0 189 145**
**EP-A- 0 213 674**
**WO-A-87/05376**
**DE-A- 2 912 840**
**DE-A- 3 132 435**

(73) Proprietor : **Uponor N.V.**
**Fouress Building Emmaplein P.O. Box 259**
**Philipsburg Sint Maarten The Netherlands**
**Antilles (AN)**

(72) Inventor : **AGREN, Lennart**
**Backgardsgatan 33**
**S-502 50 BORAS (SE)**
Inventor : **HÖLSÖ, Eino**
**Bogrydsvägen 48**
**S-515 00 Viskafors (SE)**

(74) Representative : **Ström, Tore et al**
**Ström & Gulliksson AB Studentgatan 1 P.O.**
**Box 4188**
**S-203 13 Malmö (SE)**

Jouve, 18, rue Saint-Denis, 75001 PARIS

## Description

The invention relates to a pipe for relining underground pipelines, which is of the composite type with an annularly rigid corrugated outside wall of polymer material, which is attached to the outside surface of a smooth inside wall, which consists of a thermoplastic elastomer so that it can be stretched and compressed.

Pipes of this type are described in the European patent application with publication number 0 213 674.

When an underground pipeline is to be relined by using pipes of this type the pipe is drawn from ground level through a well or manhole into the pipeline, and due to the fact that the inside wall consists of a thermoplastic elastomer the pipe then can be abruptly angled - at an angle of 90° if necessary - when it passes from the well or the manhole into the pipeline, and the pipe can adjust to existing constrictions and direction changes in the underground pipeline more easily than in case of a rigid inside wall. In order to use such relining pipes having a rigid inside wall it is usually necessary to take up wide manholes which allow the pipe to be drawn from ground level into the underground pipeline via the manhole along a rather flat trajectory.

Pipes of the type referred to herein are not without problems, however, in other respects than those relating to the procedure of drawing the pipe into the underground pipeline. In the first place problems arise in the manufacture of the pipe. The pipe is manufactured by coextruding the inside wall and the outside wall, said latter wall at the same time in connection with the extrusion being corrugated by forming and cooling the wall against chains of chilled molds and the smooth inside wall being calibrated and cooled by sliding over a cooling mandrel. The problem involved in the technique of manufacturing the pipe is that the inside wall of a thermoplastic elastomer tends to stick to the cooling mandrel involving the risk of the wall being torn to rags. In the second place there is a problem with respect to the wear resistance of the smooth inside wall of thermoplastic elastomer. This wall must be made substantially thinner than the wall of corresponding smooth, rigid polyethylene or PVC pipes for waste conduits in order that it can be stretched and compressed as is necessary at abrupt direction changes when the pipe is drawn into the underground pipeline, which means that the wear resistance will be a critical factor in this connection. At the same time it can be questioned if a wall of a thermoplastic elastomer can be on a level with a wall of polyethylene or PVC as far as the long term wear resistance is concerned.

The present invention provides a possibility to meet these problems, viz. by the relining pipe of the type referred to herein being constructed in the manner defined in the characterizing clause of claim 1.

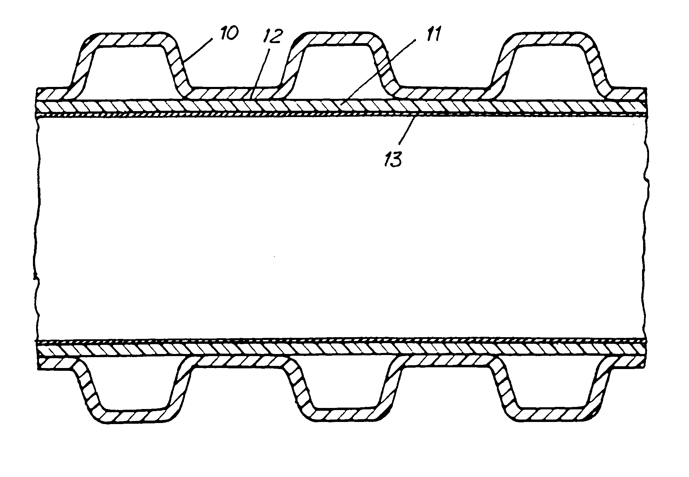

In order to explain the invention in more detail reference is made to the accompanying drawing which discloses a fragmentary axial cross-sectional view of a relining pipe according to the invention in one embodiment thereof.

The pipe shown in the drawing is of a prior art embodiment as far as it comprises a corrugated outside wall 10 and an inside wall 11 which is smooth on the inside as well as the outside thereof, the inside peaks of the outside wall being connected to the smooth outside of the inside wall at 12. The pipe preferably is manufactured by coextruding the outside and the inside walls, the outside wall being corrugated in connection with the extrusion by being formed and cooled against chains of chilled molds. The inside wall is calibrated and cooled in connection with the extrusion by means of a cooled inside mandrel. Suitable materials for the outside wall are polyethylene, polypropylene, and PVC, while suitable materials for the inside wall are e.g. EPDM mixed with polyethylene (synthetic rubber), thermoplastic olefines, e.g. VISTAFLEX (registered trademark), SANTOPRENE (registered trademark), and ALCRYN (registered trademark), ethylenevinylacetate polymers, e.g. ESCORENE (registered trademark), and mixtures of styrene, ethylene, and butane, e.g. ELEXAR (registered trademark).

On the inside surface of the inside pipe 11 a thin layer 13 of polyethylene or crosslinked polyethylene, is provided, the purpose of which is to form an antifriction layer between the mandrel and the thermoplastic elastomer and to provide improved wear-resistance of the inside pipe. If the inside wall consists of a thermoplastic elastomer which is compatible with an outside wall of polyethylene or polypropylene, then polyethylene is chosen when priority is given to the reduction of the friction, and crosslinked polyethylene is chosen when priority is given to the wear-resistance. The layer 13 can have a thickness of 0.05 to 0.30 mm on an inside wall of a thermoplastic elastomer which has a thickness of about 1 mm in case of a pipe having an outside diameter of about 200 mm. More generally the thickness of the layer 13 should measure 2-30% of the total thickness of the inside pipe 11 and the layer 13. Crosslinked polyethylene preferably is of the silan crosslinked type which can crosslink automatically under the influence of humidity after the manufacturing step proper.

A further advantage of the pipe described is that the layer 13 can be used for providing a colour code which makes possible to distinguish a normal double-wall pipe (wherein the outside wall as well as the inside wall is rigid) from a double-wall pipe having an inside wall of thermoplastic elastomer. It is important to be able to distinguish easily between these two types of pipes in handling material (handling scrap) in the factory.

**Claims**

1. Pipe for relining underground pipelines, which is of the composite type with an annular rigid corrugated outside wall (10) of polymer material, which is connected to the outside surface of a smooth inside wall (11) which consists of a thermoplastic elastomer so that it can be stretched and compressed, **characterized** in that there is provied as a wear protection on the inside of the smooth inside wall (11) a thin layer (13) of polyethylene facilitating the manufacture of the pipe.

2. Pipe as in claim 1 wherein the layer (13) consists of crosslinked polyethylene.

3. Pipe as in claim 2 wherein the layer of crosslinked polyethylene is of the silan crosslinked type.

4. Pipe as in any of claims 1 to 3 wherein the thickness of the layer (13) is of the order of 2 to 30 % of the total thickness of the inside pipe (11) and the layer (13).

**Patentansprüche**

1. Rohr zum Wiederbeschichten von unterirdischen Rohrleitungen vom Verbundtyp mit einer ringförmigen starren gewellten Außenwand (10) eines Polymermaterials, das mit der äußeren Oberfläche einer glatten Innenwand (11), bestehend aus einem thermoplastischen Elastomer, so daß es gedehnt und zusammengepreßt werden kann, verbunden ist, dadurch gekennzeichnet, daß auf der Innenseite der glatten Innenwand (11) als Verschleißschutz eine dünne Schicht (13) von Polyethylen zur Erleichterung der Herstellung des Rohres angeordnet ist.

2. Rohr nach Anspruch 1, wobei die Schicht (13) aus vernetztem Polyethylen besteht.

3. Rohr nach Anspruch 2, wobei die Schicht von vernetztem Polyethylen vom silanvernetzten Typ ist.

4. Rohr nach einem der Ansprüche 1 bis 3, wobei die Dicke der Schicht (13) in der Größenordnung von 2 bis 30 % der gesamten Dicke des Innenrohres (11) und der Schicht (13) liegt.

**Revendications**

1. Tuyau pour le regarnissage des canalisations souterraines, de type composite comportant une paroi externe ondulée rigide annulaire (10) faite d'un matériau polymère, qui est fixée à la surface externe d'une paroi interne lisse (11), constituée d'un matériau élastomère thermoplastique, de façon qu'il puisse être étiré et comprimé, caractérisé en ce qu'il comporte, en tant que protection à l'usure, sur l'intérieur de sa paroi interne lisse (11), une fine couche (13) de polyéthylène facilitant la fabrication du tuyau.

2. Tuyau suivant la revendication 1 caractérisé en ce que la couche (13) est constituée de polyéthylène ponté.

3. Tuyau suivant la revendication 2 caractérisé en ce que la couche de polyéthylène ponté est de type silane ponté.

4. Tuyau suivant la revendication 1 à 3 caractérisé en ce que l'épaisseur de la couche (13) est de l'ordre de deux à 30% de l'épaisseur totale du tuyau interne (11) et de la couche (13).